Europäisches Patentamt

European Patent Office

Office européen des brevets

(19)

(11) Publication number: **0 503 616 A1**

## (12) EUROPEAN PATENT APPLICATION

(21) Application number: **92104262.8**

(22) Date of filing: **12.03.92**

(51) Int. Cl.5: **A23N 12/10**

Priority 130391 IT BO91000077.

(30) Priority: **13.03.91**

(43) Date of publication of application:
**16.09.92 Bulletin 92/38**

(84) Designated Contracting States:
**AT BE CH DE DK ES FR GB GR LI LU MC NL PT SE**

(71) Applicant: **ELLEBY SAS**
**13, via Santi**
**I-40050 Dozza (Bologna)(IT)**

(72) Inventor: **Bertozzi, Luciano**
**352, via Emilia Ponente**
**I-40132 Bologna(IT)**

(74) Representative: **Sassatelli, Franco T., Dr.**
**c/o INIP via Ruggi 5**
**I-40137 Bologna(IT)**

(54) **Continuous cycle roasting machine.**

(57) A roasting machine with combustion chambers (1,2) and burners (3,4) ambient air sucked into combustion chambers (1,2), by compressor aspirator (5), is heated and circulated through pipesystem (6,7,8,9). Hot air is forced through pipe (10), by compressor aspirator (5), into chute (11) going through mouth (12,13) of precooking chamber (14) into liner (15) and through cooking chamber (16) into liner (17). Oxygen is introduced to raise the warm air mass, realizing a heat stability in all working sections.

FIG.1

The invention refers to a continuous cycle roasting machine particularly for granulated products such as coffee, barley or similar. The present invention foresees new features compared to the subject matter of the Italian Patent Application no. 3524A/89 filed on 19th June 1989 by the same Applicant. Principally the invented machine permits to raise the roasting section thermo effect, compared to what foreseen in the cited previous patent application, by means of a circulation of the hot air flow, sucking by the combustion chambers, which initially comes to act as heat exchanger so to raise the temperature on running and the lettin said flow to pressure contemporary into the precooking and cooking chambers. Other feature foresees a warm gas intake device in a part of the cooling chamber which in the same time sucks the working waste products, such as the granulate peels and the different kind of deposits, so to clean the roasted product advancing toward the unload mouth. Other feature foresees in cooking chamber a temperature bearing device which, when a pre-arranged level is reached, automatically and with immediate intervention starts a device actuating the cooking temperature normalization so avoiding unlikeness in the working for heat storage. It moreover foresees an integrative feature in said circulation system of the hot air flow which permits to raise the hot air quantity to let into the precooking and cooking chambers so further raising the thermo effect into the roasting section. This is permitted by two rotating liners: a beginning one, feeding by means of a feeder through and forming the precooking chamber, and a consecutive one with differentiated cooking and cooling chambers connected eache other with a chute channel. In the same way as foreseen in the cited previous art, the processing product advances into the liner by means of a spiral setting fixed into the same liner which acts as push impulse on the product facing of the spirals projecting it in a stream and so contemporary acting in continuous its mixing. Essentially the invented machine foresees for the roasting into the combustion chambers 1 and 2, forming the crankcase, the series of burners 3 and 4. The air flows, sucking from outside by means of the compressor-aspirator 5, warm theyself when passing into said combustion chambers and, licking up in raising the red-hot walls, cross a circulation system made of collectors 6, 7 and 8 letting into the central collector 9 which gives up these flows its reverberation heat which raises the temperature during their way. The hot air flow, by means of said compressor-aspirator 5, is projected through the main 10 into the chute channel 11 and, going through the mouths 12 and 13 respectively of the precooking chamber 14 into liner 15 and of the cooking chamber 16 into liner 17, intervenes at the same type on the processing product introducing oxygen and consequently raising the warm air mass. In this way is realized an heat stability on all the working section which ensures a working homogeneity. In other solution is foreseen a warm gas sucking device into the part 18 of the cooling chamber 19 foresees in the second part of the liner 17. Said device uses a sucking assembly 20 where the smokes are ejected through the discharge channel 21 while the taking suspended peels and deposits store theyself in falling into a cyclone container. In the sucking part of the deposits and of the peels the grate 22 is protected by a curved strip 23 which holds a teflon autolubricant seal 24 which is kept adherent by means of a spring 25 to avoid the product going out in advancement into the cooling chamber and to permit an elastic holdup effect to the push impulses which are forming in movement while in the upper mouth, that said assembly formed, it is permitted the peels and deposits sucking. In other machine version is foreseen into the cooking chamber an intervened automatic device to obviate to the problems caused by the presence of heat of accumulation.

In the control board 26 ia foreseen a probe 27, setting so to permit a check on the final temperature into the cooking chamber, and a second proble 28 always puts into the same chamber and sets to the wanted heat degree. When the cooking chamber feels of a heat excess, the checking probe 27 starts the electronic motor device 29 which opens a valve 30 to put cold air into the circuit. In this way is immediately realized the temperature normalization. Then the electronic motor 29 closed again the valve 30 in relation to the temperatures take by the checking probe 27 so avoiding an heat accumulation.

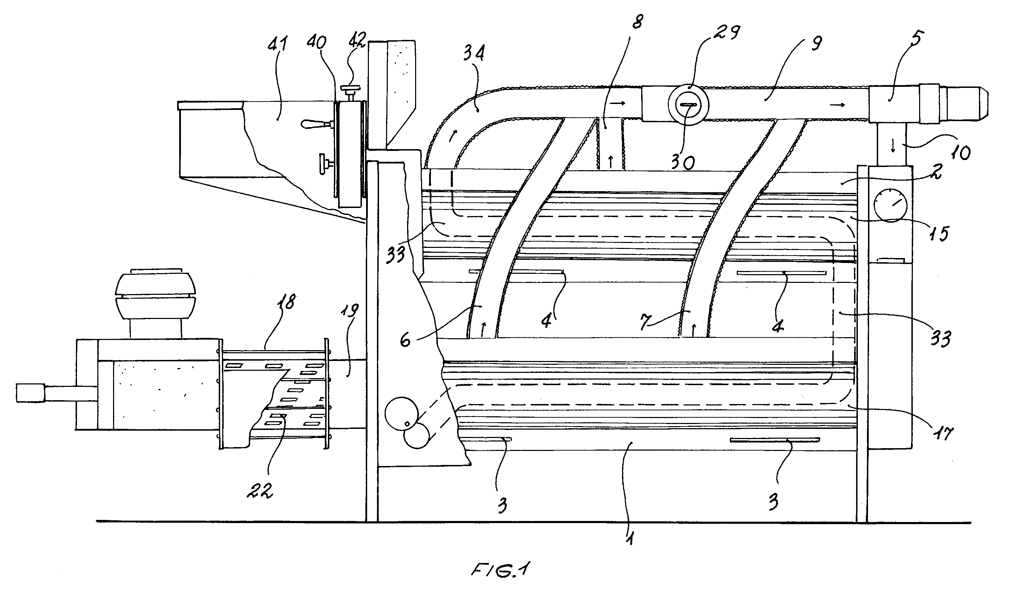

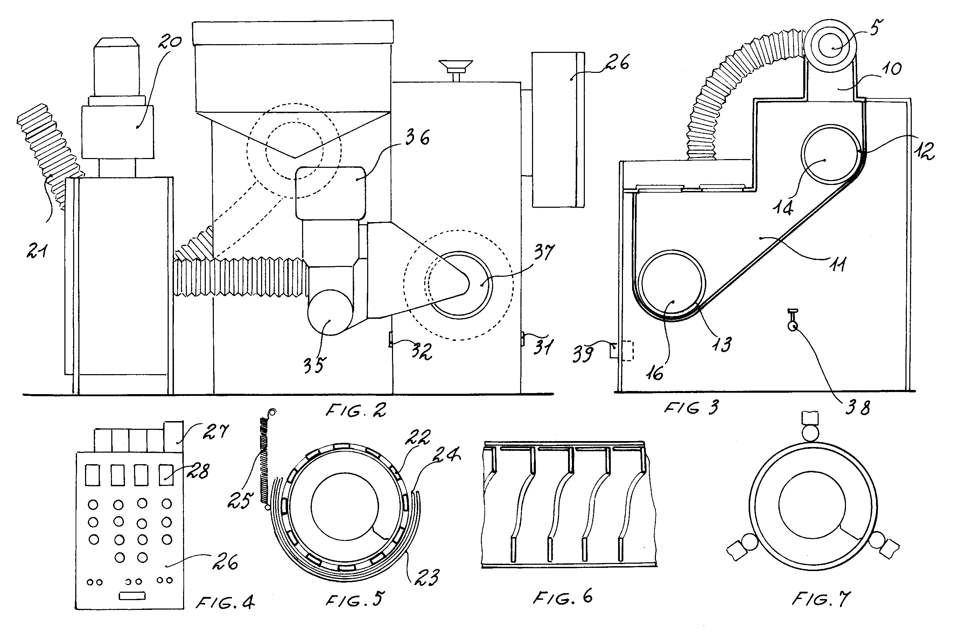

In other embodiment of the present machine is foreseen an integrative feature to raise the warm air quantity into the circulation system. The air, sucking from outside by means of the compressor-aspirator 5 through bores 31 and 32, crosses the parallel mains 33 flanked to the liner 17 into the combustion chamber 1 and then going into the combustion chamber 2 to march side by side, with disposition in the opposite direction to the previous one, to the liner 15 and flow through the bend 34 of the collector 9 into the compressor-aspirator 5. In this way for heat exchange the air warm itself on its way and it comes to be added with the other coming by means of the main system. In the subsequent part of the cooling chamber of the liner 17 the roasted product is struck by a cold air jet coming from the collector 35 with motor assembly 36. For falling the final product goes out at the cooling chamber end through the mouth 37. A version of the invented machine is showing in the drawings of sheets 1 and 2. Referring to sheet 1 fig. 1 is frontal schematic view of all the machine in cutaway to permit the sight of the two combustion chambers and of the main and secondary channels holding warm air from the compressor-aspirator 5. In sheet 2 fig. 2 is side view of the machine. Fig. 3 is view, in corrispondence with the other machine side, of section of the chute channel 11. Fig. 4 is view of the control board 26. Fig. 5 is particular of transversal section of the part of the cooling chamber where the different deposits and peels are sucking. Fig. 6 is particular in longitudinal section of a liner part to permit the sight of its inside parts. Fig. 7 is transversal section of a liner to point out the device of support and dragging. To arrange the machine for working it is opened the fuel for feeding the motor assemblies and with the drive 38 is operated the firing with push-button 39 on the relative driving valves of the series of burners 3 and 4. When in the precooking chamber 14 it is coming to the requested temperature it is opened the roll-up shutter 40 of the governor into the feeder through 41 and, by means of the setting knob 42, it is started the product drop. In the realization the single parts can be different foreseen in the inside of the present invention.

**Claims**

1. Continuous cycle roasting machine foreseen for the roasting into the combustion chambers (1 and 2), forming by the crankcase, series of burners (3 and 4) in which the air flows sucking from outside by means of a compressor-aspirator (5) warm theyself when passing into said combustion chambers and, licking up in raising the red hot walls, cross a circulation system made of three collectors (6, 7 and 8) letting into a central collector (9) which gives up these flows its reverberation heat which raises the temperature during their way characterized by the fact that the hot air flow, by means of the compressor-aspirator (5), is projected through a main (10) into a chute channel (11) and going through two mouths (12 and 13) respectively of the precooking chamber (14) into liner (15) and of the cooking chamber (16) into liner (17) intervenes at the same time on the processing product introducing oxigen and consequently raising the warm air mass and realizing a heat stability on all the working section which ensures a working homogeneity.

2. Continuous cycle roasting machine, as in claim 1), characterized by the fact that in a version is foreseen a warm gas sucking device into a part (18) of the cooling chamber (19) foreseen in the second part of the liner (17). Said device uses a sucking assembly (20) where the smokes are ejected through a discharge channel (21) while the taking suspended peels and deposits store theyself in falling into a cyclone container. In the sucking part of the deposits and peels the grate (22) is protected by a curved strip (23) which holds a teflon autolubricant seal (24) which is kept adherent by means of a spring (25) to avoid the product going out in advancement into the cooling chamber and to permit an elastic holdup effect to the push impulses which are forming in movement while in the upper mouth, that said assembly formed, is permitted the peels and deposits sucking.

3. Continuous cycle roasting machine, as in claim 1), characterized by the fact that a version foresees on the control board (26) a proble (27), setting so to permit a check on the final temperature into the cooking chamber, and a second proble (28) always put in the same chamber and sets to the wanted heat degree. When the cooking chamber feels of a heat excess the first checking probe (27) starts an electronic motor device (29) which opens a valve (30) to put cold air into the circuit. In this way is immediately realized the temperature normalization. Then the electronic motor (29) closes again the valve (30) in relation to the temperatures take by the first checking probe (27) so avoiding an heat accumulation.

4. Continuous cycle roasting machine, as in claim 1), characterized by the fact that a version foreseen an integrative feature to raise the warm air quantity into the circulation system. The air sucking from outside by means of the compressor-aspirator (5) through entrance bores (31 and 32) crosses the mains (33) flanked to the liner (17) into the first combustion chamber (1) and then going into the second combustion chamber (2) to march side by side, with disposition in the opposite direction to the previous one, to the other liner (15) and flow through a bend (34) of the collector (9) into the compressor-aspirator (5). In this way for heat exchange the air warms itself on its way and it comes to be added with the other coming by means of the main system.

5. Continuous cycle roasting machine, as in claim 1), characterized by the fact that in a version in the subsequent part of the cooling chamber of the liner (17) the roasted product is struck by a cold air jet coming from a collector (35) with motor assembly (36). For falling the final product goes out at the cooling chamber end through an exit mouth (37).

FIG.1

EP 0 503 616 A1

FIG 3

FIG. 1

FIG. 6

FIG. 2

FIG. 5

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-2 443 620 (HUBBARD J.W.) <br> * column 4, line 26 - column 7, line 12; figures 1-5 * | 1 | A23N12/10 |
| A | | 4,5 | |
| | --- | | |
| Y | DE-C-3 538 352 (MASCHINENFABRIK G.W. BARTH LUDWIGSBURG GMBH & CO.) <br> * column 5, line 9 - column 6, line 26; figures 1,2 * | 1 | |
| A | | 2-5 | |
| | --- | | |
| A | US-A-1 793 009 (PHILLIPS W.I.) <br> * page 2, line 4 - page 3, line 51; figures 1-7 * | 1,5 | |
| | --- | | |
| A | WORLD PATENTS INDEX LATEST <br> Week 8130, 26 February 1981 <br> Derwent Publications Ltd., London, GB; <br> AN 81-55126D <br> & ZA-A-8 002 098 (DAVISON A.M.) <br> * abstract * | 2 | |

TECHNICAL FIELDS
SEARCHED (Int. Cl.5)

A23N
A01F

The present search report has been drawn up for all claims

| Place of search | Date of completion of the search | Examiner |
|---|---|---|
| THE HAGUE | 25 MAY 1992 | ELSWORTH D. |